# EUROPEAN PATENT APPLICATION

(11) **EP 1 517 453 A2**
(43) Date of publication of application: **23.03.2005**
(21) Application number: 04021803.4
(22) Date of filing: 14.09.2004
(51) Int. Cl.: H04B 1/30

(54) **Apparatus and method for removing transmission DC offset from a mobile terminal transmission signal**

(30) Priority: 17.09.2003 KR 2003064490
(71) Applicant: LG ELECTRONICS INC., Seoul (KR)
(72) Inventor: Yu, Jae-Wook, Manan-Gu, Anyang, Gyeonggi-Do (KR)
(74) Representative: von Hellfeld, Axel, Dr. Dipl.-Phys.

(57) **Abstract**

An apparatus and method for removing a DC offset from a transmission signal generated by a mobile terminal is provided. The invention comprises feeding back at least a first portion of a transmission signal from a transmission module of the mobile terminal to a reception module of the mobile terminal; determining DC offset information of the transmission signal in the reception module; providing the DC offset information from the reception module to the transmission module; and removing the DC offset from the transmission signal based on the DC offset information provided to the transmission module.

## Description

### BACKGROUND OF THE INVENTION

### 1. Field of the Invention

The present invention relates to a mobile terminal, and more particularly to a method for removing a transmission direct current (DC) offset in a mobile terminal.

### 2. Description of the Related Art

The time division synchronous code division multiple access (TD-SCDMA) is the Chinese contribution to the ITU's IMT-2000 specification for third generation (3G) wireless mobile services. It is a standard implemented based on global system for mobile communications (GSM) and code division multiple access (CDMA) transmission technologies.

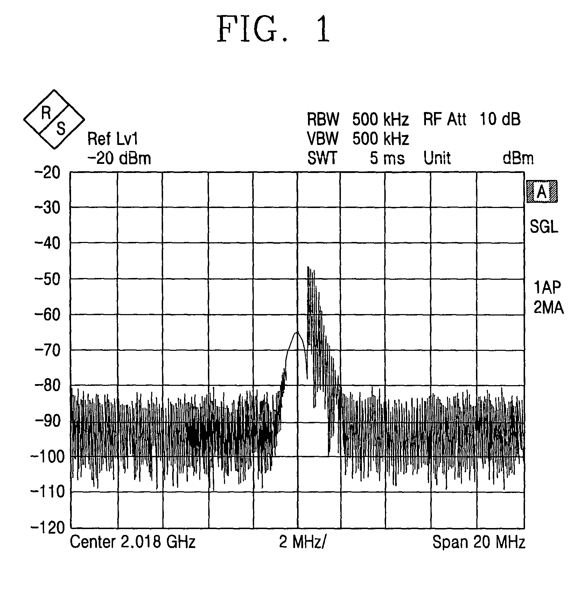

Referring to FIG. 1, when a DC offset is generated in a transmission module of a TD-SCDMA chip, a DC element relatively higher than a level of a signal to noise ratio (SNR) is generated in an RF spectrum. This has a detrimental effect on quality of a base station reception signal. In order to solve the foregoing problem, a power amplifier is employed to increase the transmission output of the mobile terminal. This results in increased power consumption and short battery life for the mobile terminal.

Typically, an initial DC offset of a transmission signal of a mobile terminal is controlled to generate a high quality signal. The signal transmission is influenced by changes in temperature, inaccuracies in digital to analog conversion, channel differences of a baseband filter for removing harmonic elements, and structure differences of an intermediate circuit.

When a GSM terminal uses direct conversion, a reception module in the GSM terminal removes a DC offset, but a transmission module is not provided with a function for removing the DC offset. Even if the transmission end is provided with the function of removing the DC offset, a transmission DC offset structure must be designed in hardware.

As a result, additional control pins and registers will have to be implemented for the control chip. This adds unwanted complexity to the chip structure and does not allow for maximum miniaturization.

A system and method is needed to overcome the above-discussed shortcomings.

### SUMMARY OF THE INVENTION

Features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, a method for removing a DC offset from a transmission signal generated by a mobile terminal is provided. The method comprises feeding back at least a first portion of a transmission signal from a transmission module of the mobile terminal to a reception module of the mobile terminal; determining DC offset information of the transmission signal in the reception module; providing the DC offset information from the reception module to the transmission module; and removing the DC offset from the transmission signal based on the DC offset information provided to the transmission module.

In one aspect of the invention, the mobile terminal operates based on TD-SCDMA technology. The transmission module feeds back the first portion of the transmission signal to the reception module by including said first portion in a particular segment of the transmission signal reserved for at least one of uplink or downlink purposes.

The transmission module feeds back the first portion of the transmission signal to the reception module by allocating said first portion to a non-used time slot in a sub-frame of the transmission signal. The non-used time slot comprises at least one of a guard period, an uplink pilot time slot, or a downlink pilot time slot in the sub-frame.

In another embodiment, the transmission signal comprises identification data so that the reception module can distinguish the DC offset information. The DC offset information of the transmission signal is fed back to the transmission module through a control signal. The feeding back is performed by a feed-back mode added to an RF switch of the mobile terminal.

In accordance with another embodiment of the invention, a system for removing a DC offset from of a transmission signal of a mobile terminal is provided. The system comprises a communication modem for processing communication data; a transmission module for transmitting the communication data via an antenna to a base station; a RF transmission/reception switch for setting at least one transmission/reception mode; and a reception module for receiving communication data from a base station; wherein the transmission module feeds back a transmission signal to the reception module in accordance with said at least one transmission/reception mode, the reception module determines DC offset information of the transmission signal, and provides the DC offset information to the communication modem by way of a control signal.

The modem may be a TD-SCDMA digital base-band (DBB) processor, in accordance with one embodiment. An RF isolator for preventing signal feedback to the transmission module may be also included. In another embodiment, the system further comprises an RF filter for filtering the signal to pass target frequency band signals.

In yet another embodiment, the system further comprises an RF surface acoustic wave (SAW) filter for passing desirable frequency band signals among the reception RF signals. A TD-SCDMA reception RF module for converting the RF signal into a baseband signal may be also included in one embodiment. A TD-SCDMA transmission Radio Frequency (RF) module may be also included for converting an analog baseband signal into an RF signal.

In accordance with one embodiment, a method for removing a DC offset in a transmission signal of a mobile terminal is provided. The method comprises allocating a non-used time slot in the transmission signal with identifying information indicating that a feed back signal is included in the non-used time slot; feeding back the transmission signal to a reception module of the mobile terminal; determining a DC offset information about the received transmission signal; and feeding back the DC offset information to the transmission module.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings are included to provide a further understanding of the invention and are incorporated in and constitute a part of this specification, illustrate embodiments of the invention and together with the description serve to explain the principles of the invention.
FIG. 1 is a graph showing an RF spectrum in a state where a DC offset is generated in a transmission signal of a TD-SCDMA terminal, in accordance with the related art.
FIG. 2 is a block diagram illustrating a terminal circuit used in a TD-SCDMA system, in accordance with one embodiment of the invention.
FIG. 3 is a structure diagram illustrating a TD-SCDMA physical channel signal format, in accordance with one embodiment of the invention.
FIGS. 4A and 4B illustrate various states of an RF switch having a feed back mode function, in accordance with the present invention.

Reference will now be made in detail to the preferred embodiments of the present invention, examples of which are illustrated in the following detailed description and the accompanying drawings.

### DETAILED DESCRIPTION OF THE PREFERRED EMBODIMENTS

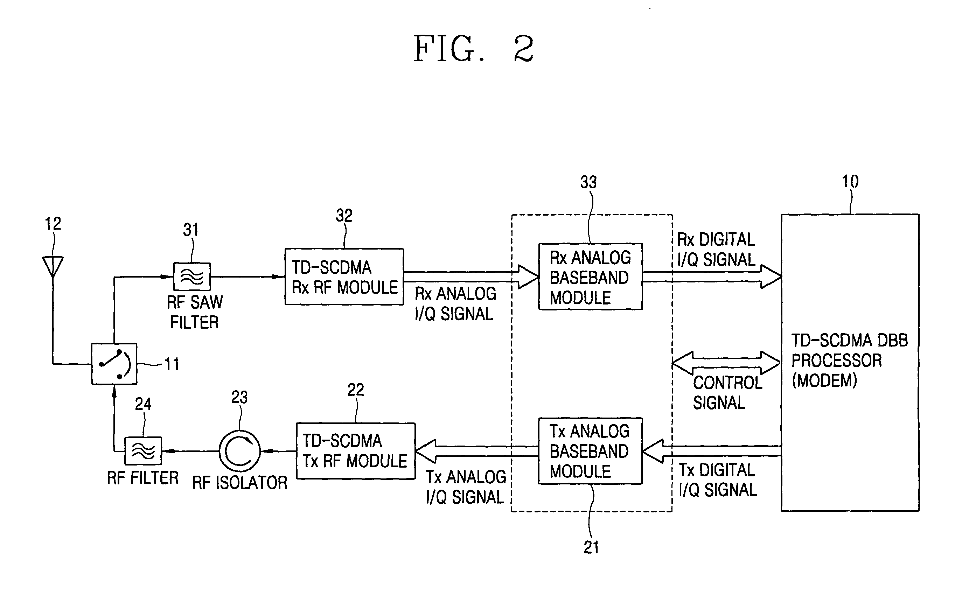

Referring to FIG. 2, in accordance with one embodiment of the invention, a TD-SCDMA terminal comprises a communication modem such as TD-SCDMA digital base-band (DBB) processor 10, for example, a transmission analog baseband module 21, a TD-SCDMA transmission Radio Frequency (RF) module 22, an RF isolator 23, an RF filter 27, an RF transmission/reception switch 11, an antenna 12, an RF surface acoustic wave (SAW) filter 31, a TD-SCDMA reception RF module 32, and a reception analog baseband module 33.

A TD-SCDMA digital base-band (DBB) processor 10 is for converting voice or image information into a baseband frequency and vice versa. Transmission analog baseband module 21 is for converting the DBB signal from the TD-SCDMA DBB processor 10 into an analog signal. TD-SCDMA transmission RF module 22 is for converting the analog baseband signal into an RF.

RF isolator 23 is for preventing signal feedback. RF filter 24 is for filtering the signal to pass target frequency band signals. RF transmission/reception switch 11 is for determining one or more transmission/reception modes. Antenna 12 is for emitting and receiving a radio wave. RF surface acoustic wave (SAW) filter 31 is for passing desirable frequency band signals among the reception RF signals.

TD-SCDMA reception RF module 32 is for converting the RF signal into a baseband signal. Reception analog baseband module 33 is for converting the analog baseband signal into a digital signal, and further outputting the digital signal to the TD-SCDMA DBB processor 10.

It is noteworthy that the particular component details and functions are provided herein by way of example. Any other component that provides a general functional equivalent of the above-named components either individually or collectively may be substituted in alternative embodiments of the invention.

In one embodiment, a transmission digital I/Q signal of the TD-SCDMA DBB processor 10 is provided to the transmission analog baseband module 21 to be converted into a transmission analog I/Q signal. The transmission analogy I/Q signal is filtered in direct current element level so as to be inputted to the TD-SCDMA transmission RF module 22. Thereafter, the transmission analog signal is transmitted to the antenna 12 through the RF isolator 23 and the RF filter 24.

The RF transmission/reception switch 11 is switched to transmission mode, so that the transmission analog signal is broadcasted from antenna 12. Conversely, when the antenna 12 receives an RF signal, the RF transmission/reception switch 11 is switched to reception mode. The RF signal is filtered to a target frequency band by the RF SAW filter 31, for example, and converted into a baseband signal by the reception RF module 32. Thereafter, the reception analog signal is converted into a reception digital signal by the reception analog baseband module 33, and inputted to the TD-SCDMA DBB processor 10.

In one embodiment, a radio frequency integrated circuit (RFIC) is utilized to determine a DC offset before a real reception burst and to provide information about compensation DC offset value through one of the control signals. If the reception RFIC uses direct conversion, a complicated structure for removing the DC offset will be needed.

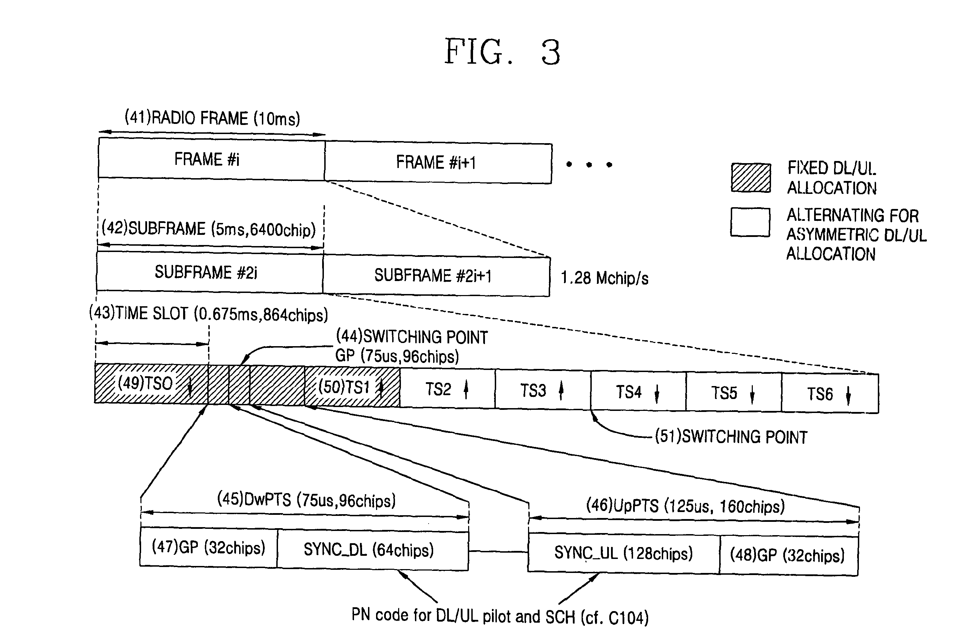

In accordance with one embodiment, removing the transmission DC offset of the mobile terminal is accomplished based on time division duplex (TDD) of the TD-SCDMA utilized as provided below with reference to FIG. 3. FIG. 3 is a structure diagram illustrating a TD-SCDMA physical channel signal format, in accordance with one embodiment.

The TD-SCDMA is operated according to the TDD in time. A sub-frame 42 is divided into a plurality of time slots. In an exemplary embodiment, seven time slots TS0 to TS6 (e.g., 0.0675ms per each time slot) are included in a sub-frame 42. Each of the divided time slots TS0 to TS6 may be used for uplink or downlink purposes in a definable or changeable state. The uplink implies a transmission path from the mobile terminal to the base station, and the downlink implies a transmission path from the base station to the mobile terminal.

One or more slots, for example, a downlink pilot time slot (DwPTS) 45, a guard period (GP) 44, and an uplink pilot time slot (UpPTS) 46 are included between the 0^{th} time slot (TS0) 49 and the 1^{st} time slot (TS1) 50 in accordance with a preferred embodiment. The DwPTS 45, the GP 44 and the UpPTS 46 distinguish fixed TS0 49 and TS1 50 and are provided for attaining time synchronization. The time slots before a switching point 51 are allocated to the uplink transmission, and the time slots after the switching point 51 are allocated to the downlink transmission, for example.

In accordance with one embodiment, to remove the transmission DC offset, the mobile terminal feeds back the transmission signal to the reception unit by using a downlink GP 47 or an uplink GP 48 according to the TDD. Alternatively, if a non-used time slot exists, the reception module determines a state of the signal based on the DC offset check and control function of the reception module, and reflects the state of the signal to the transmission module.

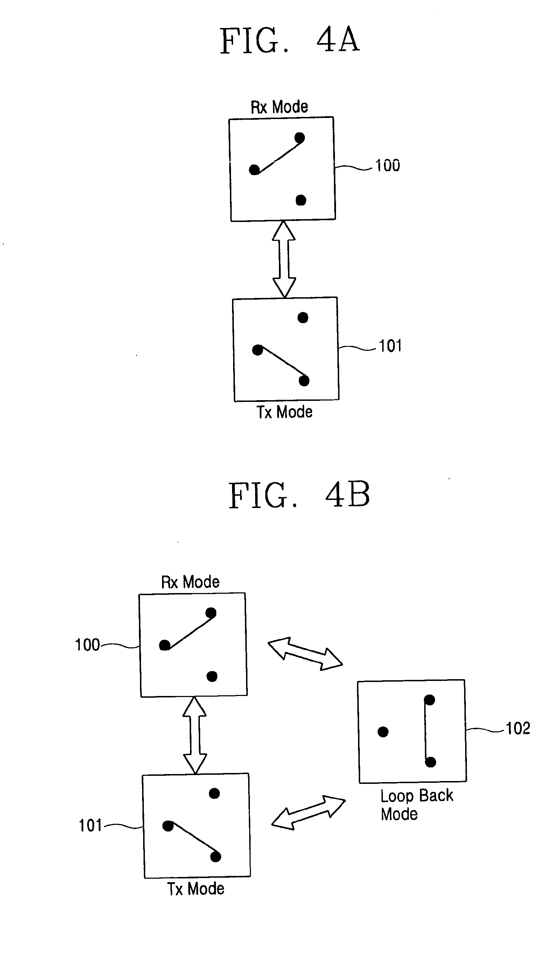

Referring to FIGS. 4A and 4B, to determine a signal state, an RF switch is provided with a feed back function. FIG. 4A illustrates a general RF switch having a reception mode 100 and a transmission mode 101. FIG. 4B illustrates an RF switch having a reception mode 100, a transmission mode 101 and a feed back mode 102, in accordance with one embodiment of the invention.

When the terminal receives a downlink transmission signal from a base station (e.g., TS0 49) for a period of time (e.g., 25us) during which no task is executed, then GP 47 is inserted in a segment of the DwPTS 45 (e.g., front segment). In one embodiment, the transmission unit transmits a dummy data to distinguish the DC offset for the reception unit.

Accordingly, the reception unit receives the dummy data, checks quality of the signal from the transmission unit based on the DC offset, and feeds back the DC offset information of the transmission signal by using the control signal (see FIG. 2) to control the transmission unit. The uplink terminal transmission signal of the TS1 50 can be compensated based on the DC offset. In one embodiment, the dummy data is not meaningful data but a value (e.g., 000000, 111111, etc.) used for mode identification purposes (e.g., identifying a feedback state).

In one embodiment, the GP 48 of the UpPTS 46 is inserted before the TS1 50. If one or more time slots are not used (e.g., 7 time slots), compensation using feed back can be applied to the non-used time slots and executed in the terminal. Accordingly, quality of the signal can be controlled by the DC offset of the TD-SCDMA in the terminal to improve quality of the transmission signal. Thus, the power amplifier need not generate a strong signal, due to the signal's higher quality and therefore lower power consumption is achieved.

The present invention may be embodied in several forms without detracting from the spirit or essential characteristics of the invention. It should also be understood that the above-described embodiments are not limited by any of the details of the foregoing description, unless otherwise specified, but rather should be construed broadly within the spirit and scope of the invention as defined in the appended claims. Therefore all changes and modifications that fall within the metes and bounds of the claims, or equivalence of such metes and bounds are intended to be embraced by the appended claims.

## Claims

1. A method for removing a DC offset from a transmission signal generated by a mobile terminal, the method comprising:
feeding back at least a first portion of a transmission signal from a transmission module of the mobile terminal to a reception module of the mobile terminal;
determining DC offset information of the transmission signal in the reception module;
providing the DC offset information from the reception module to the transmission module; and
removing the DC offset from the transmission signal based on the DC offset information provided to the transmission module.

2. The method of claim 1, wherein the mobile terminal operates based on time division synchronous code division multiple access (TD-SCDMA) technology.

3. The method of claim 1, wherein the transmission module feeds back the first portion of the transmission signal to the reception module by including said first portion in a particular segment of the transmission signal reserved for at least one of uplink or downlink purposes.

4. The method of claim 1, wherein the transmission module feeds back the first portion of the transmission signal to the reception module by allocating said first portion to a non-used time slot in a sub-frame of the transmission signal.

5. The method of claim 4, wherein the non-used time slot comprises a guard period in the sub-frame.

6. The method of claim 4, wherein the non-used time slot comprises a downlink pilot time slot in the sub-frame.

7. The method of claim 4, wherein the non-used time slot comprises an uplink pilot time slot in the sub-frame.

8. The method of claim 1, wherein the transmission signal comprises identification data so that the reception module can retrieve the DC offset information provided by the reception module.

9. The method of claim 1, wherein the DC offset information of the transmission signal is fed back to the transmission module through a control signal.

10. The method of claim 1, wherein the feeding back is performed by a feed-back mode implemented in an RF switch of the mobile terminal.

11. A system for removing a DC offset from of a transmission signal of a mobile terminal, the system comprising:
a communication modem for processing communication data;
a transmission module for transmitting the communication data via an antenna to a base station;
a RF transmission/reception switch for setting at least one transmission/reception mode; and
a reception module for receiving communication data from a base station;
wherein the transmission module feeds back a transmission signal to the reception module in accordance with said at least one transmission/reception mode, the reception module determines DC offset information of the transmission signal, and provides the DC offset information to the communication modem by way of a control signal.

12. The system of claim 11, wherein the modem is a TD-SCDMA digital base-band (DBB) processor.

13. The system of claim 11, further comprising an RF isolator for preventing signal feedback to the transmission module.

14. The system of claim 11, further comprising an RF filter for filtering the signal to pass target frequency band signals.

15. The system of claim 11, further comprising an RF surface acoustic wave (SAW) filter for passing desirable frequency band signals based on the reception RF signals.

16. The system of claim 11, further comprising a TD-SCDMA reception RF module for converting the RF signal into a baseband signal.

17. The system of claim 11, further comprising a TD-SCDMA transmission Radio Frequency (RF) module for converting an analog baseband signal into an RF signal.

18. A method for removing a DC offset in a transmission signal of a mobile terminal, the method comprising:
allocating a non-used time slot in the transmission signal with identifying information indicating that a feed back signal is included in the non-used time slot;
feeding back the transmission signal to a reception module of the mobile terminal;
determining a DC offset information about the received transmission signal; and
feeding back the DC offset information to the transmission module.

19. The method of claim 18, wherein the non-used time slot comprises a guard period.

20. The method of claim 18, wherein the transmission signal comprises dummy data for indicating that DC offset information of the transmission signal is fed back to the transmission module.

21. The method of claim 18, further comprising removing the DC offset from the transmission signal based on the DC offset information provided to the transmission module.

22. The method of claim 18, wherein the feeding back is performed by a feed-back mode implemented in an RF switch of the mobile terminal.
